# EUROPEAN PATENT APPLICATION

(11) **EP 1 618 862 A2**
(43) Date of publication of application: **25.01.2006**
(21) Application number: 05254541.5
(22) Date of filing: 21.07.2005
(51) Int. Cl.: A61G 7/05, A61G 12/00

(54) **Steering system for medical transport cart**

(30) Priority: 22.07.2004 US 898030
(71) Applicant: Datex-Ohmeda, Inc., Laurel, MD 20723 (US)
(72) Inventor: Mannix, Sean, Titusville, NJ 08560 (US)
(74) Representative: Hedley, Nicholas James Matthew

(57) **Abstract**

A transport cart (10) for attaching to a patient care apparatus (12), such as an infant care apparatus to move that infant care apparatus from one location to another. The transport cart is dockable to the infant care apparatus forming an overall footprint of the combination transport cart/infant care apparatus. The infant care apparatus has casters (24) to provide mobility thereto and the transport cart has a rearward portion with casters (30) and a forward portion that docks with the infant care apparatus that has a roller (38) that is rotatable about a fixed horizontal axis and, when the transport cart is docked to the infant care apparatus, the roller becomes located at or proximate to the center of the footprint of the combination transport cart/infant care apparatus. By the use of the centrally located roller, the user can more readily steer the combination apparatus by directing the rearward portion of the docking cart.

## Description

### Background of the Invention

The present invention relates to a transport cart for transporting a patient care apparatus from one location to another within a medical facility.

During the care of patients in a medical care institution, particularly infants, the infant is often maintained in a specialized environment contained within an infant care apparatus, such as an incubator or a combination incubator and warmer. An example of an infant incubator is shown and described in U.S. Patent 4,936,824 of Koch *et al* and a combination apparatus that combines the function of the infant incubator along with the function of an infant warmer is shown and described in U.S. Patent 6,213,935 and entitled "Infant Warming Apparatus" of *Mackin et al* and both of which patents are assigned to the assignee of the present application.

In either types of the aforedescribed infant care apparatus, the infant is normally resting on a bed within the apparatus, however, there are times where the infant must be moved from one location to another within that medical facility. While it is, of course possible to remove the infant from the particular infant care apparatus and thereafter transport the infant by means of a separate vehicle, it is more advantageous to move the infant care apparatus itself with the infant still contained therein. In such manner, the various services and treatment being provided to the infant need not be discontinued, such as monitors and the like and also there is less disruption and consequent stress to the infant since the infant can remain in the protective environment throughout the move rather than being removed therefrom during the move and eventual return back to the protective environment of the original infant care apparatus.

Accordingly, to facilitate or carry out the move of the infant care apparatus containing the infant, there can be used a transport cart that basically docks with the infant care apparatus and both the infant care apparatus and the transport cart are moved, coupled together. The infant care apparatus is thereby disconnected from the normal electrical power and gases, such as oxygen and air, supplied by the medical facility and those basic needs are thereafter provided by the transport cart during the move. The transport cart normally has batteries to supply the electrical power and gas tanks to supply the needed gases to the infant care apparatus. As such, the transport cart and the infant care apparatus are moved together without any loss of service or care to the infant.

One of the difficulties, however, with the use a docking transport cart with an infant care apparatus is that the combined transport cart and infant care apparatus becomes difficult to steer since the overall apparatus is larger then just an infant care apparatus and still must be steered by the user to negotiate the combination transport cart/infant care apparatus through the hospital corridors and through doors to reach the ultimate destination. Thus, the overall combination is rather unwieldy and is difficult to maneuver through the hospital since the infant care apparatus may have four caster wheels contacting the floor and the transport cart may also have four caster wheels and it is difficult to coordinate all eight caster wheels in moving that combination transport cart/infant care apparatus through the hospital.

It would be therefore advantageous to have a steering system that allows the transport cart combined with the infant care apparatus to be better negotiated through the hospital during the transit of an infant.

### Summary of the Invention

The present invention relates to a transport cart for use in transporting a patient care apparatus with a medical facility. The invention is applicable to any patient care apparatus where a patient is being maintained in a medical environment, such as a patient bed for adults and the like, but will be more specifically described herein as usable with an infant care apparatus where an infant is being maintained in a protective environment such as an incubator or an infant care apparatus that combines the functions of an incubator and an infant warmer.

Therefore, in accordance with the present invention, there is a transport cart supported on wheels and which is attachable to a wheeled infant care apparatus so that the transport cart can thereby move along with the infant care apparatus through such interconnection. Once affixed together the transport cart provides necessary services such as power and gas supply to the infant care apparatus.

The infant care apparatus typically is supported on casters that, as is normal, swivel about individual vertical axies so that the infant care apparatus can readily be moved in the desired direction across the floor of the medical facility. In the usual situation, the user can push the infant care apparatus so as to relocate that apparatus to the desired location within the facility.

The transport cart is also a wheeled apparatus and has a plurality of casters that also are rotatable so as to allow omni-directional movement and typically are casters that have rollers the contact the floor and which are, in turn, pivotable about vertical axies in the movement of the transport cart. Other types of casters may also have omnidirectional movement, that is, the ability to allow the caster to roll in any direction, including a spherical caster that rolls about a centerpoint in any direction. As used herein, therefore, the term caster is defined to mean any caster that allows the apparatus that is being supported by the caster to roll or move in differing directions across a floor.

As explained, the transport cart normally includes batteries to provide electrical power as well as container(s) of gas which are used to supply those services to the infant care apparatus when it is desired to move the infant care apparatus while continuing the normal operation of the infant care apparatus in support of an infant contained therein.

In such case, the transport cart is docked to the infant care apparatus, that is, the transport cart is wheeled up to the location of the infant care apparatus and affixed thereto by means such as latches or the like so that thereafter both the transport cart and the infant care apparatus are moved together in the joined relationship with the infant care apparatus being supplied with the utilities that are present on the transport cart.

The present invention, therefore, relates to the transport cart, the combination of the transport cart affixed or docked to the infant care apparatus and to a method of bringing about that combination of transport cart and infant care apparatus.

Accordingly, in accordance with the present invention, the transport cart has a rearward portion having at least two casters, spaced apart, and each of the casters is rotatable or pivotable about a vertical axis in the manner of a standard caster or about a point axis in the case of a spherical roller. There is also a forward portion, that is, the portion or area of the transport cart that faces and docks with the infant care apparatus when the two are affixed together.

In the embodiment disclosed, the forward portion of the transport cart actually becomes located beneath the infant care apparatus in a manner that will be later explained. There is a roller that is rotatably affixed to the forward portion of the transport cart such that the roller itself underlies the infant care apparatus when engaged with the transport cart. The roller rotates about a fixed horizontal axis and that axis is parallel to a center line that passes between the casters located at the rearward portion of the transport cart. Preferably the roller is located about midway between the casters and displaced forwardly from those casters.

The infant care apparatus is also supported on a plurality of casters and the infant care apparatus has casters that are generally located at or proximate to the periphery of the infant care apparatus. For example, the infant care apparatus is normally a rectangular configuration such that the casters would essentially be located at each of the corners of the rectangular configuration, however, the infant apparatus may be formed in other configurations.

In the combination of the transport cart and the infant care apparatus, that is, when the transport cart is docked to the infant care apparatus, there is created a footprint of the combination transport cart/patient care apparatus. A docking procedure affixes the transport cart to the infant care apparatus so as to position the roller of the transport cart to be underneath the footprint of the combination transport cart/patient care apparatus and, in one embodiment, the roller is located at or proximate to the center of that footprint. In another embodiment, the roller can be located at about the center of gravity of the combination of the transport cart/patient care apparatus. The key, however is that the roller is displaced in the forward direction with respect to the casters located at the rearward portion of the transport cart and be located within the footprint of the combined transport cart/patient care apparatus.

Thus, where the footprint of the combination transport cart/patient care apparatus infant care apparatus is rectangular, the roller of the transport cart can, in the one embodiment, become situated generally at the crossing point of diagonals drawn between the opposite corners of the rectangular footprint.

In the manner described, the steerability of the combination apparatuses is greatly facilitated since the roller is constrained to rotate in a fixed plane, that is, in only one direction and is not pivotal about a vertical or point axis as are the casters. Thus, with the roller of the transport cart located forward of the casters located at the rearward portion of the transport cart and within the footprint of the combination transport cart/patient care apparatus, there is a turning leverage present that aids in steering the combination apparatus.

Since the combination transport cart/patient care apparatus is intended to be steered by a handle located at the rearward portion of the transport cart, the movement of the combination apparatus by moving the handle to the left or right will cause the combination apparatus to rotate about the centrally located roller and which greatly improves the control of the movement and steerability of the combination apparatus.

As a further feature or advantage of having the configuration and location of the roller of the transport cart, there can be a braking mechanism that controls the rotation of the roller so that the user can have an electrical or mechanical braking action on the roller. Alternatively, there may be a speed limiting function for the roller to allow a maximum speed to be controlled, either inherently or by the operator.

These and other features and advantages of the present invention will become more readily apparent during the following detailed description taken in conjunction with the drawings herein.

### Brief Description of the Drawings

FIG. 1 is a perspective view of a transport cart in position to be docked to an infant care apparatus;
FIG. 2 is a perspective view of the combination transport cart/infant care apparatus affixed together;
FIG. 3A and B are side schematic views, respectively, of the transport cart in position to be docked to an infant care apparatus and of the combination transport cart/infant care apparatus; and
FIGS. 4A and 4B are top schematic views, respectively, of the transport cart in position to be to docked an infant care apparatus and of the combination transport cart/infant care apparatus.

### Detailed Description of the Invention

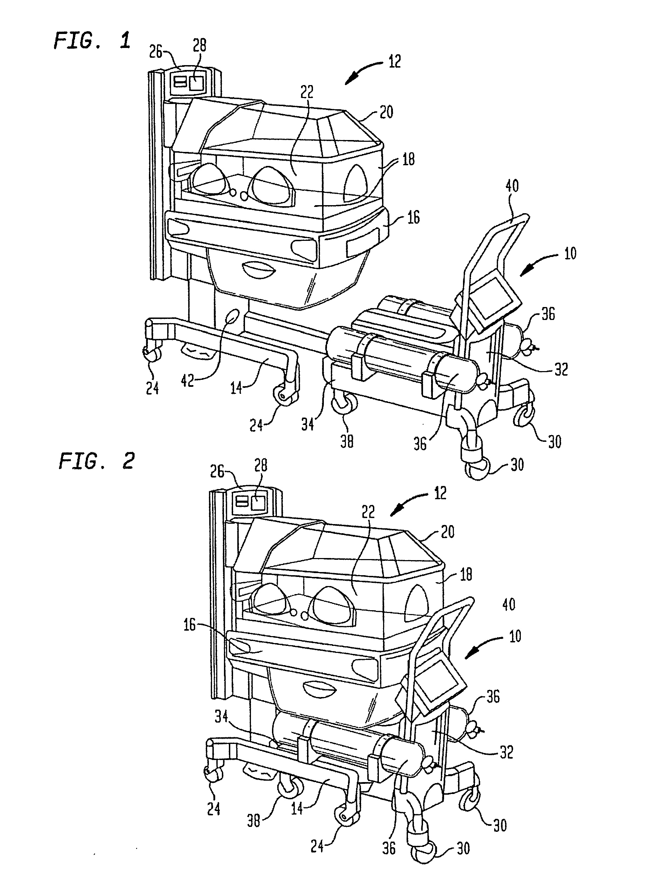

Referring now to Figs. 1, there is shown a perspective view of a transport cart 10 constructed in accordance with the present invention. It should be noted that the present invention is described specifically with respect to an infant care apparatus, however, the present invention is equally applicable to other patient care apparatus that support a patient while that patient is undergoing treatment and where a source of electrical power is required to power various devices that provide care and/or monitor the status of the patient, including adult beds or other such apparatus. Those devices requiring electrical power may be incorporated into the patient care apparatus or may be simply mounted to the patient care apparatus and therefore move with the patient care apparatus when the patient care apparatus is moved from one location to another location carrying the patient.

Accordingly, as can be seen, there is also an infant care apparatus, specifically an infant care apparatus 12 that can be constructed in accordance with the aforementioned U.S. Patent 6,213,935 of Mackin *et al* and which basically comprises a base 14 that supports an infant platform 16 for supporting the infant. A plurality of transparent walls 18 surround the infant when positioned on the infant platform 16 and a vertically movable canopy 20 is positioned over the upper peripheral edge of the transparent walls 18 to form an infant compartment 22 therein for providing the controlled atmosphere for the infant including control of the temperature and humidity within the infant compartment 22.

The infant care apparatus 12 has a plurality of casters 24 to enable the infant care apparatus 12 to be readily wheeled from one location to another within the hospital environment. The casters 24 can be of a conventional type where the casters 24 comprise small rollers that rotate about a horizontal axis but that horizontal axis is free to swivel or rotate about vertical axies. The small roller is offset with respect to the vertical axies to allow the small roller to both swivel and rotate to allow the infant care apparatus 12 to be moved omni-directionally within the health care facility. Other types of casters can, of course be used such as a spherical roller that contacts the floor and which is free to rotate omni-directionally about its centerpoint axis, it only being of importance that the caster allow the infant care apparatus to be rolled along the floor in differing directions.

The infant care apparatus 12 has a control panel 26 that provides an easy and convenient location for the user to operate the infant care apparatus 12. The control panel 26 may also include one or more monitors 28 to monitor functions of the infant care apparatus 12 or the infant being treated in that infant care apparatus 12. The control function of the infant care apparatus 12 as well as the monitors 28 are operated by means of electrical power and thus, under normal conditions, the infant care apparatus 12 is connected to the normal supply of electrical power that is available in the hospital room or nursery.

The transport cart 10 also has a plurality of casters 30 located at the rearward portion 32 of the transport cart 10. As used herein, the portion of the transport cart 10 that faces, and thus enters underneath the infant care apparatus 12 as the transport cart 10 is docked to the infant care apparatus 12 will be referred to as the forward portion 34 and the portion of the transport cart 10 that faces away from the infant care apparatus 12, when docked thereto, will be referred to as the rearward portion 32.

The transport cart 10 is adapted to be affixed or docked to the infant care apparatus 12 so that the transport cart 10 can be used to move the infant care apparatus 12 from one location to another within the hospital environment. During that transit, the transport cart 10 provides the electrical power along with other utilities to the infant care apparatus. As an example, there can be oxygen or other gas cylinders 36 carried by the transport cart 10 for use by the infant during the transit thereof since the infant care apparatus 12 is otherwise cut off from its normal supply of oxygen from the hospital central supply.

There is also a roller 38 that is located at the forward portion 34 of the transport cart 10 and which is rotatably mounted to the transport cart 10 so as to rotate about a fixed, horizontal axis. The roller 38 is positioned at a predetermined location at the forward portion 34 of the transport cart 10 to serve a purpose to be later described.

Turning now to Fig. 2, there is shown the transport cart 10 that is affixed to the infant care apparatus 12 so that the transport cart 10 can be propelled to move the infant care apparatus 12 along therewith and there may be an affixation means such as latches 38 to affix the transport cart 10 to the infant care apparatus 12 so that the two apparatus can travel together in order to move the infant care apparatus 12 containing the infant being treated from one location to another while still supplying the necessary service to maintain the infant under the desired conditions and the status ascertained by the monitor 28. In the normal movement of the combination transport cart/infant care apparatus, the user pushes or pulls on a handle 40 on the transport cart 10 and steers the combination transport cart/infant care apparatus around the hospital facility by moving that handle 40 to the left or the right.

There is an electrical connection between the transport cart 10 and the infant care apparatus 12 so that the source of electricity generated by the transport cart 10 can be electrically connected to power the infant care apparatus 12 and the monitors 28 during the time that the infant care apparatus 12 and the transport cart 10 are being moved within the hospital. That connection can be by some interconnection such as a connector 42 (Fig. 1) on the frame of the infant care apparatus 12 that mates with a connector (not shown) on the transport cart 10 or there may be hard wires that allow the infant care apparatus 12 to be plugged into a suitable receptacle located on the transport cart 10.

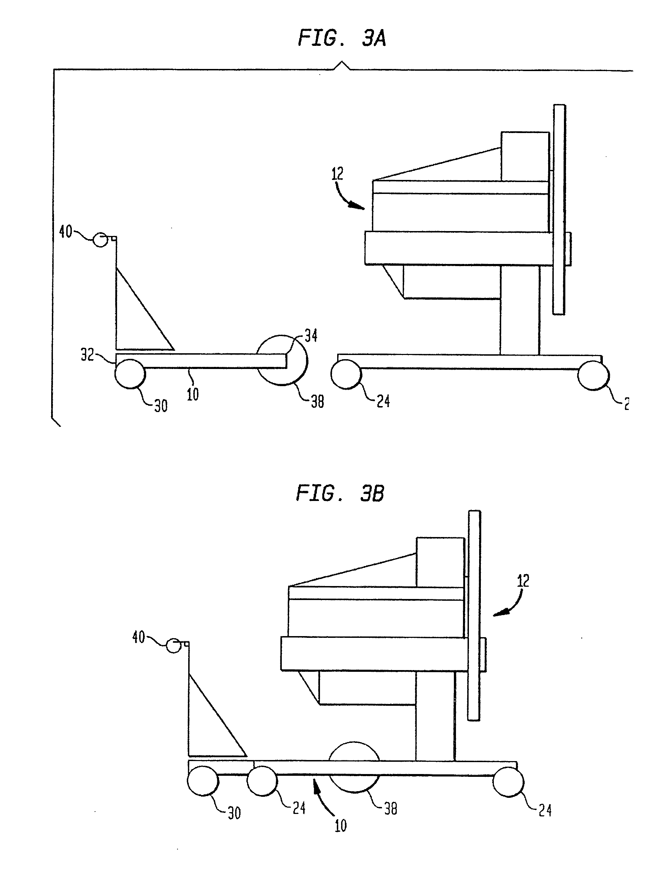

Turning now to Figs. 3A and 3B, there are side schematic views, respectively, of the transport cart 10 in position to be docked to an infant cart apparatus 12 and in the ultimate docked position forming the combination transport cart/infant care apparatus. Thus, as can be seen in Fig 3A, the transport cart 10 is aligned with the infant care apparatus 12 to be docked thereto and having the casters 30 located at the rearward portion 32 of the transport cart 10 with the roller 38 located in the forward portion 34 of the transport cart 10. The infant care apparatus 12 has casters 24 located spaced apart for supporting the apparatus.

As such, in Fig. 3B, the transport cart 10 has been docked to the infant care apparatus 12 in a latched position (not shown) such that the two apparatus are firmly affixed together so that the combination transport cart/infant care apparatus can be manually pushed or pulled by means of the handle 40 located at the rearward portion 32 of the transport cart 10. As also can be seen, the location of the roller 38, when the combination transport cart/infant care apparatus has been completed and latched together, is located about midway between the longitudinal ends of the footprint formed by the combination transport cart/infant care apparatus.

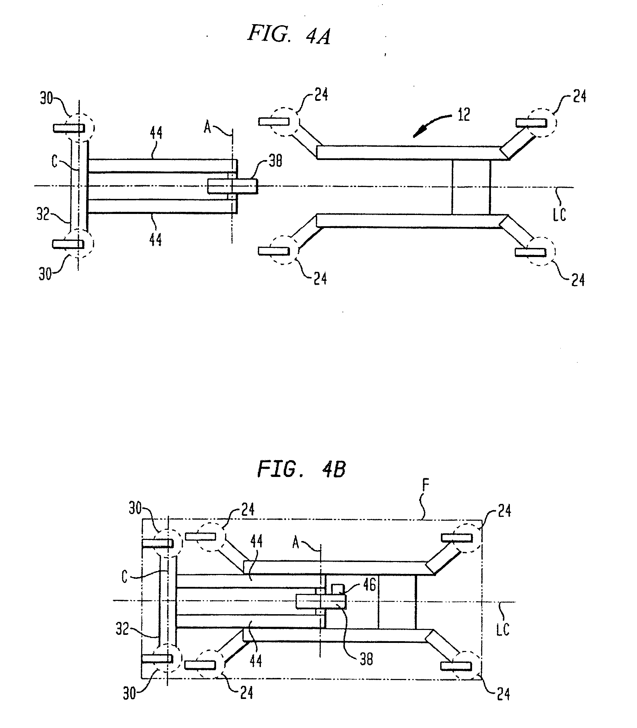

Turning now to Figs. 4A and 4B, there are top schematic views, respectively, of the transport cart 10 in position to be docked to an infant cart apparatus 12 and in the ultimate docked position forming the combination transport cart/infant car apparatus. Thus in Fig 4A, the roller 38 can be seen to be captured between a pair of longitudinal horizontal members 44 of the transport cart 10 so as to mount the roller 38 for rotation about a horizontal axis A. In the embodiment shown, the horizontal axis A is parallel to a center line C drawn between the two casters 30 at the rearward portion 32 of the transport cart 10 and is located about midway between those casters 30 but displaced forwardly thereof. As described, the roller 38 rotates about the fixed axis A such that the roller 38 does not swivel as do the casters 24, 30 but maintains the same orientation and rolling direction with respect to the transport cart 10.

In Fig. 4B, the transport cart 10 has been docked to the infant care apparatus 12 and, as can be seen, the combination transport cart/infant care apparatus establishes a footprint indicated by the dotted lines in Fig. 4B and labeled F. As also shown in this embodiment, the roller 38 becomes automatically located, by means of the docking of the transport cart 10 to the infant care apparatus 12, at or proximate to the center of that footprint F. As another description of the location of the roller 38, the roller 38 is located along the longitudinal centerline LC of the combination transport cart/infant care apparatus with its horizontal axis of rotation A at a right angle to that longitudinal centerline LC. As indicated, since the axis A is fixed, the roller 38 can only roll along that longitudinal centerline LC of the combination transport cart/infant care apparatus.

As an alternate embodiment, the location of the roller 38 can be at the center of gravity of the combination transport cart/infant care apparatus. The advantages of the present invention are present, however, as long as the roller 38 is displaced forwardly of the casters 30 located at the rearward portion 32 of the transport cart 10, that is, displaced toward the forward portion 34 of the transport cart 10 with respect to those casters 30.

Accordingly, since all of the other contacts with the floor of the medical facility are by means of casters that allow movement in differing directions, the steering of the combination transport cart/infant care apparatus by the user moving the handle to the left or the right, is more stabilized through the use of the roller 38 rotatable about a fixed horizontal axis A.

As a further feature of the particular roller 38, a brake mechanism 46 can be mounted to the transport cart 10 and be operable to apply a braking action to the roller 38 to retard its ability to freely roll so that the user can apply some braking action when needed. The brake mechanism 46 can be of any conventional design such as a braking used on a bicycle and have some operative controller accessible in the vicinity of the handle 40 for the convenience of the user. Alternate braking mechanisms can include electric powered brakes.

As a further feature, there may be a speed limiting device 48 to limit the speed of the combination transport cart/infant care apparatus to a maximum allowable speed by electrical or mechanical means using a flywheel system or other mechanical system.

Those skilled in the art will readily recognize numerous adaptations and modifications which can be made to the transport cart of the present invention which will result in an improved steering capability and braking system for the movement of a combination transport cart/infant care apparatus yet all of which will fall within the scope and spirit of the present invention as defined in the following claims. Accordingly, the invention is to be limited only by the following claims and their equivalents.

## Claims

1. A transport cart for transporting a patient care apparatus for supporting a patient, said transport cart adapted to be attached to the patient care apparatus and be movable therewith, said transport cart having a rearward portion having at least two rear casters, said at least two rear casters being located along a centerline passing through both of said casters, and a forward portion having a roller rotatable about a fixed horizontal axis and displaced away from said center line passing between said rear casters.

2. The transport cart as defined in claim 1 wherein said transport cart is adapted to be attached to an infant care apparatus and optionally includes a latching mechanism to affix the transport cart to an infant care apparatus.

3. The transport cart as defined in claim 2 wherein said fixed horizontal axis of said roller is generally parallel to the centerline passing through said rear casters.

4. The transport cart as defined in claim 2 or claim 3 wherein said at least two rear casters comprise two casters and said roller is located displaced a predetermined distance away from said centerline and about midway between said two casters.

5. The transport cart as defined in any of claims 2 to 4 wherein said transport cart further includes one or both of:
(a) a braking mechanism to retard the rotational movement of the roller; and
(b) a speed limiting system to limit the maximum speed of the roller.

6. A combination transport cart/patient care apparatus comprising a transport cart releasable affixed to a patient care apparatus, said combination transport cart/patient care apparatus having a footprint, a plurality of casters spaced apart and located proximate the perimeter of the patient care apparatus, said transport cart having a rearward portion having at least two rear casters affixed thereto, said transport cart having a forward portion having a roller rotatable affixed thereto and rotatable about a fixed horizontal axis, said roller being located within the footprint of said combination transport cart/patient care apparatus.

7. The combination as defined in claim 6 wherein the footprint of the combination transport cart/patient care apparatus is a generally rectangular footprint and said roller is located at about the center of the footprint of the combination transport cart/patient care apparatus.

8. The combination as defined in claim 6 or claim 7 wherein the transport cart is as claimed in any of claims 1 to 5.

9. A method of joining a medical transport cart to a patient care apparatus, comprising:
providing a transport cart having a rearward portion having at least two rear casters and a forward portion having a roller affixed to the transport cart proximate to the forward portion and rotatable about a horizontal fixed axis of rotation,
providing a patient care apparatus having a plurality of casters supporting the infant care apparatus,
attaching the transport cart to the patient care apparatus to carry out the movement of the patient care apparatus from one location to another location within a hospital environment to form a combination of transport cart/patient care apparatus having a footprint;
locating the roller on the transport cart such that the roller is automatically located within the footprint of the combination transport cart/patient care apparatus when the transport cart is attached to the patient care apparatus.

10. The method as defined in claim 9 wherein the step of locating the roller comprises locating the roller such that, when the transport cart is attached to the patient care apparatus, the roller is automatically located at about the dimensional center of the combination transport cart/patient care apparatus or is automatically located at about the center of gravity of the combination transport cart/patient care apparatus.

11. The method as defined in claim 9 or claim 10 wherein the transport cart is as claimed in any of claims 1 to 5 or the combination of the transport cart and the patient care apparatus is as claimed in any of claims 6 to 10.
